# EUROPEAN PATENT SPECIFICATION

(11) **EP 2 977 604 B1**
(45) Date of publication and mention of the grant of the patent: **27.06.2018**
(21) Application number: 14881394.2
(22) Date of filing: 19.09.2014
(51) Int. Cl.: F03B 13/18, F03B 13/26

(54) **DEVICE FOR HARNESSING SEA WAVE ENERGY**
VORRICHTUNG ZUR ENERGIENUTZUNG VON MEERESWELLEN
DISPOSITIF POUR EXPLOITER L'ÉNERGIE PRODUITE PAR LA HOULE MARINE

(30) Priority: 29.05.2014 ES 201400423
(43) Date of publication of application: 27.01.2016
(73) Proprietor: Anastasi Ribalta, Francisco, 25126 Almenar (Lleida) (ES)
(72) Inventor: Anastasi Ribalta, Francisco, 25126 Almenar (Lleida) (ES)
(74) Representative: Mohammadian, Dario
(86) International application number: PCT/ES2014/000148
(87) International publication number: WO 2015/181402

(56) References cited:
- DE-A1- 19 612 124
- DE-A1-102010 012 288
- DE-A1-102011 101 115
- ES-U- 1 100 855
- FR-A1- 2 467 997
- GB-A- 2 225 811
- GB-A- 191 228 343
- US-A- 1 766 457

## Description

### OBJECT OF THE INVENTION

The object of the present invention is a device for making use of the energy of sea waves which, comprising buoys mounted on collapsible arms which are coupled to a horizontal driving shaft by means of respective single-direction rotatory movement transmission mechanisms; and which driving shaft is mounted and free to rotate on top of support pillars and connected to an electric generator, presents construction details directed to enabling the adaptation of the driving shaft's height, and consequently of the buoy-carrying arms, with the objective of compensating for tidal height differences.

### TECHNICAL FIELD OF THE INVENTION

This invention is applicable to the field dedicated to the manufacturing of sea wave actuated energy generators.

### BACKGROUND OF THE INVENTION

In utility model ES-U-1 100 855 of the same holder of the present invention, a device for making use of the energy of waves is described, the device comprising: pillars fixed to the marine floor and which support on their upper part a horizontal shaft over which arms, mounted by means of free wheels, having on their end a buoy which causes the collapsing of the respective arm due to the effect of the waves, which transmits to the horizontal shaft the rotation movement by means of the said free wheels.

This device requires that the buoy-carrying arms have a significant length to make use of the energy of the waves and to compensate for the height differences caused by tides.

The utilization of such great length arms increases the production costs and the space necessary for the implementation of the mentioned device, and reduces the device's performance, as the described rotation amplitude of the collapsible arms due to waves is reduced as the length of said collapsible arms increases.

Therefore, the technical problem encountered is the development of a device for making use of the energy of sea waves that solves in a satisfactory manner these inconveniences.

### DESCRIPTION OF THE INVENTION

In order to solve the mentioned problems, the device for making use of the energy of sea waves of the invention has been devised which is of the same type as previously mentioned however presents certain constructive particularities directed to enabling a driving shaft height regulation with the objective of compensating for tide-induced water height differences in such a manner that the device can achieve a high performance without the need for over-dimensioning the length of the collapsible arms.

This solution, in addition to improving the device's performance, reduces its manufacturing costs and the space necessary for its implementation.

In order to achieve the proposed objectives and in accordance with the invention, this device comprises driving shaft support pillars formed by a lower section, vertical, attached to the marine floor, and by an upper section moveable with respect to the lower section and on top of which the driving shaft is mounted; and comprising pillar height-regulation pinion-rack mechanisms of the upper section with respect to the lower section; in which the pinions are fixed to a horizontal motorized rod mounted on top of the lower section of the pillars, and the rack is engaged with said pinions and fixed to the respective upper sections of the corresponding pillars.

With these features, the height of the upper section of the pillars is modified by means of the actuation of the motorized horizontal rod and consequently of the driving shaft and, by means of the collapsible arms, of the associated buoys.

The collapsible arms are mounted on top of the driving shaft by means of free-rotating sleeves and have gear actuating pawls fixed to the driving shaft and which transmit said collapsible arms' rotatory movement, in a single rotation direction, to the driving shaft. In this manner, when the collapsible arms rise due to the action of the waves on the corresponding buoys, their rotation movement is transmitted to the driving shaft by the actuation of the actuating pawls over respective gears; the buoys falling freely to the initial position once the waves stop acting on said buoys.

According to the invention, the upper section and the lower section of each pillar may be telescopically mounted, the rack of the corresponding pinion-rack mechanism being disposed in parallel to the corresponding pillar and longitudinally fixed to the upper section of the pillar.

Optionally, it has been foreseen that the upper section of each pillar is hinged on top of the lower section's top end of the respective pillar by means of a horizontal rod and allowed to swing freely; in this case the rack of the corresponding pinion-rack mechanism being engaged with the respective pinion, disposed in an oblique position and fixed by means of a horizontal rotating rod to an intermediate point of the upper section of the corresponding post.

In this case, by acting on the motorized horizontal rod, the pinions mounted on the same actuate on the respective rack that cause a variation in the angle formed by the upper and lower sections of each pillar.

The driving shaft comprises Cardan-joint type articulations for the coupling of successive portions of the driving shaft, with the objective of providing the device with a modular character and prevent possible misalignments between successive driving shaft portions and to guarantee the transmission of the rotation movement to the electric generator.

### DESCRIPTION OF THE DRAWINGS

To complement this description and with the objective of facilitating the comprehension of the features of the invention, the present description is accompanied by a set of drawings in which, with illustrative and non-limitative character, the following is represented:
**FIG. 1** depicts a panoramic view of one exemplary embodiment of the device for making use of the energy of sea waves according to the invention having, in this case, telescopic pillars.
**FIG. 2** depicts a panoramic view of one of the swinging arms carrying respective buoys.
**FIG. 3** depicts one mounting detail of one of the swinging arms over the driving shaft in which the gears conforming the single-direction rotation movement transmission mechanisms can be observed.
**FIG. 4** depicts a variation of an embodiment of the device of the invention in which the pillars present a hinging upper section on top of the lower section's top end of the pillar.
**FIG. 5** depicts one detail of the pinion-rack mechanism used in the embodiment of FIG. 4 for actuating the upper section of the corresponding pillar.

### PREFERRED EMBODIMENT OF THE INVENTION

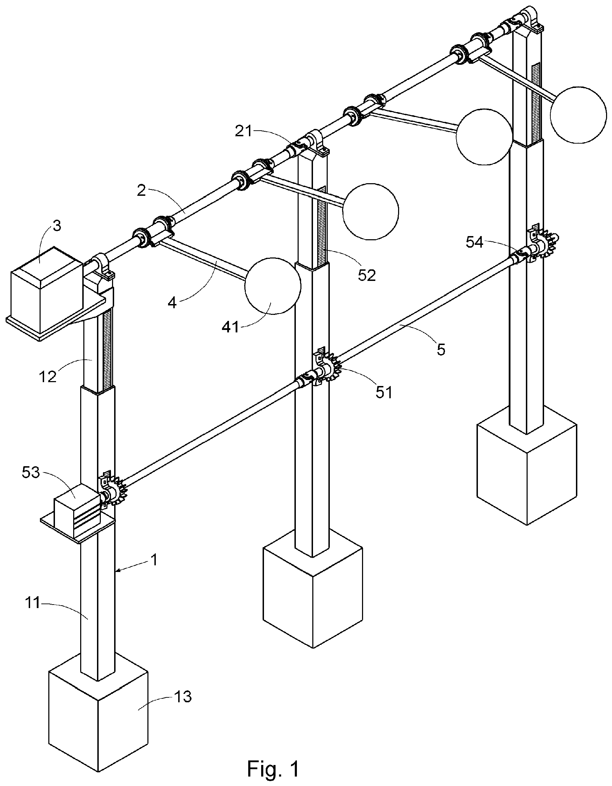

In the exemplary embodiment shown in FIG. 1 the device comprises three support pillars (1) of a driving shaft (2) connected to an electric generator (3), said driving shaft (2) having mounted thereon several collapsible arms (4) carrying respective buoys (41).

Each pillar (1) is formed by a lower section (11) and an upper section (12) telescopically mounted thereupon.

The lower section (11) of each pillar (1) is fixed to the marine floor by means of a block (13) of concrete.

In order to regulate the height of the upper section (12) of the pillars with respect to the lower section (11), the device comprises pinion-rack mechanisms (51, 52) with the pinions (51) fixed to a horizontal rod (5) actuated by a motor (53).

In the example shown in mentioned FIG. 1, the rack (52) is engaged with the pinions (5) through windows defined in the lower section (11) of the pillars (1) and fixed to the upper sections (12) of the mentioned pillars (1).

In this case the driving shaft (2) as well as the horizontal rod (5) are formed by successive inter-related sections by means of respective articulations (21, 54) of the Cardan-joint type, which compensate for possible misalignments in the successive sections of the same.

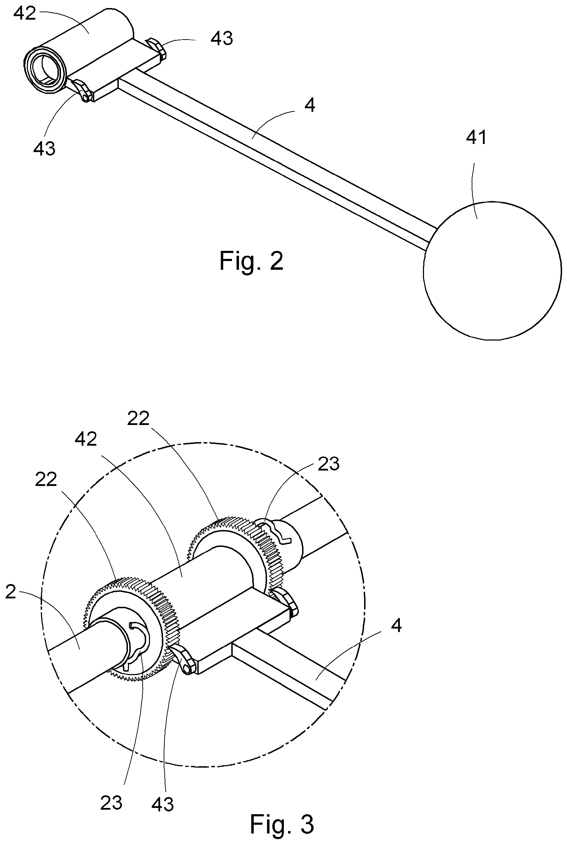

As can be seen in FIG. 2, the buoy-carrying (51) collapsible arms (4) dispose in one of their ends of a free-rotation sleeve (42) for mounting on the driving shaft (2) and pawls (43) for transmitting the rotatory or swinging movement, in a determined direction, to the driving shaft (2).

As can be seen in FIG. 3, the pawls (43) are responsible for acting upon some gears (22) fixed to the driving shaft (2) by means of pins (23) in such a manner that when the collapsible arms rotate towards the upper zone due to the wave pushing on respective buoys (41), the pawls (43) transmit this rotatory movement to the driving shaft (2) by means of the gears (22).

Once the waves stop acting on the buoys (41), the collapsible arms (4) fall by their own weight without transmitting any movement to the driving shaft (2).

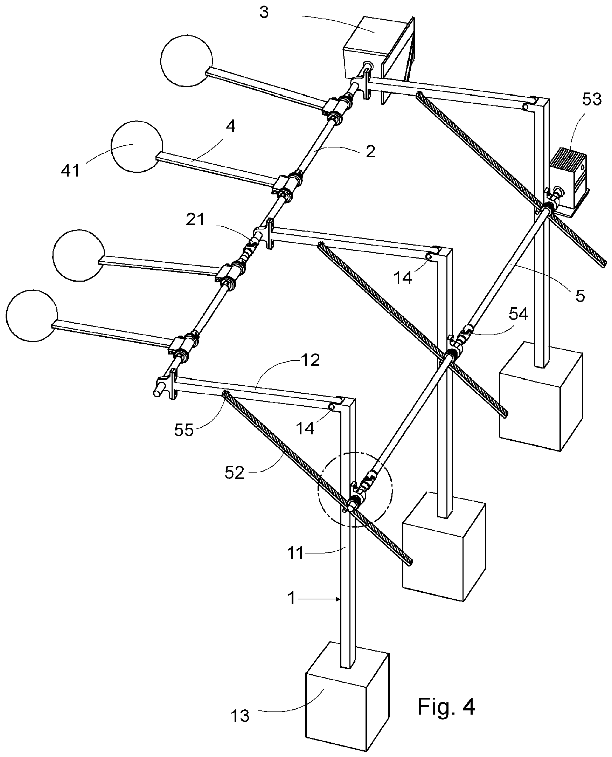

In the variation on the embodiment shown in FIG. 4, the upper section (12) of the pillars is hinging on the lower section (11) of the corresponding pillar by means of a horizontal rod (14) and permitted to swing with respect to the same.

In this embodiment, each rack (52) is engaged to its respective pinion (51), disposed in an oblique position and fixed by means of a horizontal rotating rod (55) to an intermediate point of the upper section (12) of the corresponding pillar (1).

By means of the motor's (53) actuation, the rack (52) is displaced and consequently the inclination of second section (12) of the pillars is modified which translates to an upwards or downwards movement of the driving shaft (2) and of its associated elements.

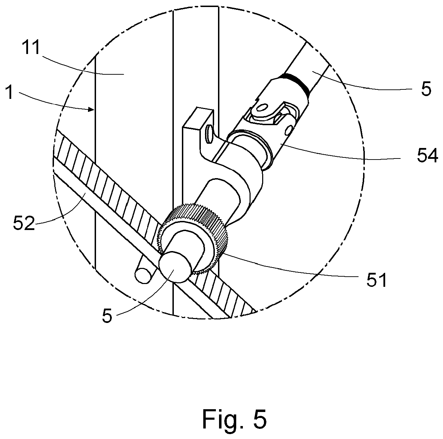

In the detail shown in FIG. 5, one can observe the portion of the rack (52) engaged with the pinion (51) of the horizontal rod (5).

Once the nature of the invention has been sufficiently described, as well as a preferred embodiment of the same, it is hereby noted that the materials, forms, size and disposition of the described elements may be modified as long as this does not modify the essential features of the invention which are claimed in the following.

## Claims

1. Device for making use of the energy of sea waves comprising buoys (41) mounted on collapsible arms (4), coupled to a driving shaft (2) by means of respective single-direction rotatory movement transmission mechanisms, and which driving shaft (2) is horizontally mounted and free to rotate on top of support pillars (1) and connected to an electric generator (3); **characterised in that** the driving shaft (2) support pillars (1) are formed by a lower vertical section (11), fixed to the marine floor, and by an upper section (12), moveable with respect to the lower section (11); the device comprising pillar height regulation pinion-rack mechanisms (51, 52) of the upper section (12) with respect to the lower section (11); in which the pinions (51) are fixed to a horizontal rod (5) mounted on top of the lower section (11) of the pillars (1) and actuated by a motor (53), and the rack (52) is engaged with said pinions (51) and fixed to the respective upper sections (12) of the corresponding pillars (1).

2. Device according to claim 1, **characterised in that** the collapsible arms (4) are mounted on top of the driving shaft (2) by means of free-rotating sleeves (42) and have gear (22) actuating pawls (43) fixed to the driving shaft (2) and which transmit said collapsible arms' (4) rotatory movement in a single rotation direction to the driving shaft (2).

3. Device according to claim 1, **characterised in that** the upper section (12) and the lower section (11) of each pillar (1) are telescopically mounted, and the rack (52) of the corresponding pinion-rack mechanism (51, 52) is disposed parallel to the corresponding pillar (1), and longitudinally fixed to the upper section (12) of said pillar.

4. Device according to claim 1, **characterised in that** the upper section (12) of each pillar is hinged to the top of the lower section (11) of the pillar, allowed to swing freely, by means of a horizontal rod (14); and the rack (52) of the corresponding pinion-rack mechanism (51, 52) is engaged with the respective pinion (51), disposed in an oblique position and fixed by means of a horizontal rotating rod (55) to an intermediate point of the upper section (12) of the corresponding pillar (1).

5. Device according to claim 1, **characterised in that** the driving shaft (2) comprises coupling articulations (21), of the Cardan-joint type, of successive portions of the driving shaft (2).

## Patentansprüche

1. Vorrichtung zur Nutzung der Energie von Meereswellen, umfassend Bojen (41), die an umklappbaren Armen (4) befestigt sind, die an eine Antriebswelle (2) mithilfe von entsprechenden Einzelrichtung-Drehbewegungsübertragungsmechanismen gekoppelt sind, wobei die Antriebswelle (2) an Stützpfeilern (1) horizontal befestigt und frei darauf drehbar ist und mit einem Stromgenerator (3) verbunden ist; **dadurch gekennzeichnet, dass** die Stützpfeiler (1) für die Antriebswelle (2) aus einem unteren vertikalen Abschnitt (11), der am Meeresboden fixiert ist, und einem oberen Abschnitt (12), der in Bezug auf den unteren Abschnitt (11) beweglich ist, besteht; wobei die Vorrichtung Säulenhöhenregulierung-Ritzel-Zahnstangen-Mechanismen (51, 52) des oberen Abschnitts (12) in Bezug auf den unteren Abschnitt (11) umfasst; wobei die Ritzel (51) auf einer horizontale Stange (5) befestigt sind, die am unteren Abschnitt (11) der Säulen (1) angebracht ist und von einem Motor (53) betätigt werden, und wobei die Zahnstange (52) mit den Ritzeln (51) in Eingriff ist und an den entsprechenden oberen Abschnitten (12) der entsprechenden Säulen (1) befestigt ist.

2. Vorrichtung nach Anspruch 1, **dadurch gekennzeichnet, dass** die umklappbaren Arme (4) an der Antriebswelle (2) mithilfe von frei rotierenden Hülsen (42) angebracht sind und Zahnräder (22) betätigende Sperrklinken (43) aufweisen, die an der Antriebswelle (2) befestigt sind und die Drehbewegung der umklappbaren Arme (4) in eine einzige Drehrichtung auf die Antriebswelle (2) übertragen.

3. Vorrichtung nach Anspruch 1, **dadurch gekennzeichnet, dass** der obere Abschnitt (12) und der untere Abschnitt (11) jedes Pfeilers (1) ausziehbar montiert sind und die Zahnstange (52) des entsprechenden Ritzel-Zahnstangen-Mechanismus (51,52) parallel zum entsprechenden Pfeiler(1) angeordnet und der Länge nach am oberen Abschnitt (12) des Pfeilers befestigt ist.

4. Vorrichtung nach Anspruch 1, **dadurch gekennzeichnet, dass** der obere Abschnitt (12) jedes Pfeilers mithilfe eine horizontalen Stange (14) gelenkig mit der Oberseite des unteren Abschnitts (11) verbunden ist, sodass er frei schwingen kann; und die Zahnstange (52) des entsprechenden Ritzel-Zahnstangen-Mechanismus (51, 52) mit dem entsprechenden Ritzel (51) im Eingriff ist, wobei sie in einer schrägen Position angeordnet und mithilfe einer horizontalen Drehstange (55) an einem Zwischenpunkt des oberen Abschnitts (12) des entsprechenden Pfeilers (1) befestigt ist.

5. Vorrichtung nach Anspruch 1, **dadurch gekennzeichnet, dass** die Antriebswelle (2) Kupplungsgelenke (21) vom Kardangelenktyp aus aufeinanderfolgenden Abschnitten der Antriebswelle (2) umfasst.

## Revendications

1. Dispositif destiné à utiliser l'énergie des vagues de la mer comprenant des bouées (41) montées sur des bras repliables (4), couplés à un arbre d'entraînement (2) au moyen de mécanismes de transmission de mouvement rotatif unidirectionnel respectifs et lequel arbre d'entraînement (2) est monté à l'horizontale et libre de tourner sur le dessus de piliers de support (1) et relié à un générateur électrique (3); **caractérisé en ce que** les piliers de support (1) de l'arbre d'entraînement (2) sont formés par une section verticale inférieure (11), fixée au sol marin et par une section supérieure (12), mobile par rapport à la section inférieure (11); le dispositif comprenant des mécanismes pignon-crémaillère de régulation de hauteur de pilier (51, 52) de la section supérieure (12) par rapport à la section inférieure (11); dans lequel les pignons (51) sont fixés à une tige horizontale (5) montée sur le dessus de la section inférieure (11) des piliers (1) et actionnée par un moteur (53) et la crémaillère (52) est mise en prise avec lesdits pignons (51) et fixée aux sections supérieures respectives (12) des piliers correspondants (1).

2. Dispositif selon la revendication 1, **caractérisé en ce que** les bras repliables (4) sont montés sur le dessus de l'arbre d'entraînement (2) au moyen de manchons à rotation libre (42) et ont des cliquets (43) d'actionnement d'engrenage (22) fixés à l'arbre d'entraînement (2) et qui transmettent ledit mouvement rotatif des bras repliables (4) dans une seule direction de rotation à l'arbre d'entraînement (2).

3. Dispositif selon la revendication 1, **caractérisé en ce que** la section supérieure (12) et la section inférieure (11) de chaque pilier (1) sont montées de façon télescopique et la crémaillère (52) du mécanisme de pignons-crémaillère correspondant (51, 52) est disposée parallèle au pilier correspondant (1) et fixée au plan longitudinal à la section supérieure (12) dudit pilier.

4. Dispositif selon la revendication 1, **caractérisé en ce que** la section supérieure (12) de chaque pilier est articulée sur le dessus de la section inférieure (11) du pilier, peut osciller librement, au moyen d'une tige horizontale (14); et la crémaillère (52) du mécanisme de pignons-crémaillère correspondant (51, 52) est en prise avec le pignon respectif (51), disposée dans une position oblique et fixée au moyen d'une tige rotative horizontale (55) à un point intermédiaire de la section supérieure (12) du pilier correspondant (1).

5. Dispositif selon la revendication 1, **caractérisé en ce que** l'arbre d'entraînement (2) comprend des articulations de couplage (21), du type joint à cardan, de parties successives de l'arbre d'entraînement (2).
